# EUROPÄISCHE PATENTANMELDUNG

(11) **EP 4 258 195 A1**
(43) Veröffentlichungstag der Anmeldung: **11.10.2023**
(21) Anmeldenummer: 22167173.8
(22) Anmeldetag: 07.04.2022
(51) Int. Cl.: G06Q 10/08, B65G 1/137

(54) **OPTIMIEREN EINER BEREITSTELLUNG VON LADEGUT AN EINEM KOMMISSI-ONIERARBEITSPLATZ EINES INTRALOGISTIKSYSTEMS**

(71) Anmelder: TGW Logistics Group GmbH, 4614 Marchtrenk (AT)
(72) Erfinder: KETTLGRUBER, Gerald, 4030 Linz (AT); POTRUSIL, Thomas, 4490 Sankt Florian (AT)
(74) Vertreter: Burger, Hannes

(57) **Zusammenfassung**

Computerimplementiertes Verfahren (100) zum Optimieren einer Bereitstellung von Ladegut (14) an einem Kommissionierarbeitsplatz (26) eines Intralogistiksystems (10). Hierbei werden Transportzeiten von Ladegut (14) von einer Puffervorrichtung (50) über ein Transportsystem (22, 24) zu einem Kommissionierarbeitsplatz (26) berechnet. Weiterhin wird eine zu erwartende Kommissionierleistung eines Kommissionierers (32) am Kommissionierarbeitsplatz (26) prognostiziert. Basierend auf diesen Informationen wird eine optimierte zukünftige Bereitstellungssequenz von Ladegut (14) vor dem Kommissionierarbeitsplatz (26) sowie eine Ladegutbestückung der Pufferplätze (54) und/oder der Pufferpositionen (52) berechnet, sodass weder Stausituationen noch Leerlaufsituationen entstehen und folglich eine Gesamtleistung des Intralogistiksystems verbessert wird.

## Beschreibung

### Hintergrund der Erfindung

Moderne Intralogistiksysteme, wie beispielsweise Distributionszentren von Handelsorganisationen, sind hochkomplexe Anlagen mit tausenden oder sogar zehntausenden einzelnen Komponenten, die miteinander in technischer Wechselwirkung stehen. Solche Komponenten können beispielsweise Fördervorrichtungen, wie etwa Förderbänder, Sortierer, intelligente Regalsysteme, Lagersysteme oder weitere mechanische oder elektromechanische Baugruppen sein. Weiterhin sind intelligente Steuersysteme für die genannten Komponenten sowie Warehouse Control Systeme (WCS), Warehouse Management Systeme (WMS) und Materialflusssteuerungen vorgesehen, um die komplexen Abläufe und Funktionen zu steuern.

Die Wirtschaftlichkeit von Intralogistiksystemen hängt zu einem großen Teil vom effektiven Zusammenspiel der einzelnen Komponenten ab. Dies betrifft beispielsweise einerseits Komponenten, welche eine Lagerung und/oder einen Transport von Ladegut betreffen, und andererseits Komponenten, welche die Abarbeitung von Kommissionieraufträgen an Kommissionierarbeitsplätzen betreffen. Insbesondere betrifft dies auch den Wunsch nach einer möglichst effektiven Auslastung der Kommissionierarbeitsplätze. Hier werden beispielsweise Artikel, die zu einem Kommissionierauftrag bzw. einer Bestellung eines Kunden gehören, versandfertig zusammengestellt und zur späteren Auslieferung bereitgestellt. Die einzelnen Artikel eines Auftrags, welche im Folgenden als Ladegut beschrieben sind, werden aus einem Lagerbereich über eine Fördertechnik zum Kommissionierarbeitsplatz transportiert und dort zur Kommissionierung bereitgestellt.

An den Kommissionierarbeitsplätzen werden die Kommissionieraufträge durch einen Kommissionierer abgearbeitet. Ein Kommissionierer kann als menschliche Person oder auch als maschineller Kommissionierer, beispielsweise als Kommissionierroboter verstanden werden. Eine individuelle Kommissionierleistung eines Kommissionierers, also beispielsweise eine benötigte Zeit zum Abarbeiten eines Kommissionierauftrags bestimmten Umfangs, unterliegt üblicherweise zeitlichen Schwankungen. Gleichzeitig werden durch den Kommissionierer häufig mehrere Aufträge parallel bearbeitet. Durch die Komplexität der Fördertechnik und/oder durch komplexe Kommissionieraufträge mit einer Vielzahl von Artikeln werden häufig Wartezeiten auf das nächste Ladegut beobachtet, die mit einem Leerlauf des Kommissionierers oder auch mit Stausituationen vor den Kommissionierarbeitsplätzen einhergehen können. Im Hinblick auf bekannte technische Lösungsansätze werden im Stand der Technik schwerpunktmäßig Aspekte der optimierten Steuerung der Komponenten von Intralogistiksystemen diskutiert. So beschreibt beispielsweise die EP 3 385 893 A1 ein Verfahren zur Steuerung von Transportrobotern für Ladegut für den teil- oder vollautomatischen Betrieb eines Intralogistiksystems.

Es wäre vor diesem Hintergrund wünschenswert, durch eine Optimierung einerseits der Auslastungen von Kommissionierern und andererseits der weiteren Komponenten des Intralogistiksystems insgesamt eine Verbesserung einer Gesamtleistung (Gesamtperformance) des Intralogistiksystems zu erreichen.

### Offenbarung der Erfindung

Es kann folglich als eine Aufgabe der Erfindung angesehen werden, dass Schwankungen einer Auslastung von Kommissionierern verringert und/oder eine Auslastung von Anlagenkomponenten verbessert werden, um beispielsweise eine effektivere Abarbeitung eines oder mehrerer Kommissionieraufträge durch einen Kommissionierer zu erreichen. Die Gegenstände der unabhängigen Ansprüche lösen dieses Problem.

Der nachfolgend beschriebenen Lösung liegen dabei die folgenden Überlegungen zugrunde: Eine Herausforderung bei der Steigerung eines Durchsatzes von Ladegut durch ein Intralogistiksystem sind zeitliche Leistungsschwankungen sowohl von Komponenten eines Intralogistiksystems, betreffend die Lagerung und/oder den Transport von Ladegut als auch von Kommissionierern.

Hierfür umfasst das Intralogistiksystem einen oder mehrere Kommissionierarbeitsplätze, eine Puffervorrichtung zum Zwischenspeichern von Ladegut, eine Fördertechnik zum Fördern von Ladegut zwischen der Puffervorrichtung und dem Kommissionierarbeitsplatz oder den Kommissionierarbeitsplätzen, sowie eine Ladegut-Manipulationseinheit zur Übergabe des Ladeguts von der Puffervorrichtung an die Fördertechnik. Somit kann Ladegut in der Puffervorrichtung bereitgestellt und zwischengespeichert, von der Ladegut-Manipulationseinheit an die Fördertechnik übergeben und mittels der Fördertechnik zu einem oder mehreren Kommissionierarbeitsplätzen transportiert werden.

Ferner können Komponenten des Intralogistiksystems beispielsweise sein:
- Komponenten zum Transport von Waren, insbesondere ein Einlager- und Auslagersystem umfassend ein oder mehrere Regalbediengeräte (RBG), beispielsweise Einebenenregalbediengeräte (Shuttles) und/oder Mehrebenenregalbediengeräte (stacker cranes), und/oder eine Fördertechnik zum Transport von Waren, wie beispielsweise eine stationäre Fördertechnik, insbesondere eine Hängefördertechnik und/oder eine bodengebundene Fördertechnik, und/oder eine mobile Fördertechnik, insbesondere autonom verfahrbare Transportfahrzeuge, z. B. Automated guided vehicles (AGV) und/oder Autonomous mobile robots (AMR),
- Komponenten zum Sortieren von Waren, wie beispielsweise Sortiervorrichtungen und dergleichen,
- Komponenten zum Bearbeiten von (Kommissionier-)Aufträgen, insbesondere automatische und/oder manuelle Arbeitsplätze, beispielsweise Kommissionierarbeitsplätze, Packstationen, Kommissionierroboter und dergleichen,
- Komponenten zum Handhaben von Waren, beispielsweise Palettierer, Depalettierer, Greifroboter und dergleichen,
- Komponenten zum Lagern von Waren, insbesondere Lagerplätze zum Lagern von Waren, welche beispielsweise durch mobile Lagerregale, stationäre Lagerregale und/oder dergleichen bereitgestellt sind,
- Komponenten zum Unterstützen von Waren, insbesondere Ladehilfsmittel, beispielsweise Tablare, Behälter, Kartons, Hängetaschen zum hängenden Transport von Waren und dergleichen und/oder
- Komponenten zum Verarbeiten von Daten, beispielsweise Softwarekomponenten, Steuerungsvorrichtungen, insbesondere Warehouse Management System (WMS), Warehouse Control System (WCS), und dergleichen. Das Ladegut umfasst vorzugsweise eine Vielzahl von Ladehilfsmitteln, welche zur Aufnahme der Ware bzw. der Artikel ausgebildet ist.

Eine verringerte Performance kann einerseits durch Leerlaufsituationen entstehen, wobei ein Kommissionierer nach Abschluss eines vorhergehenden Arbeitsschrittes zwar bereit wäre, einen nächsten Kommissionierarbeitsschritt auszuführen, aber das dafür benötigte Ladegut nicht rechtzeitig über die Fördertechnik am Kommissionierarbeitsplatz eintrifft. Hierdurch entstehen Leerlaufzeiten am Kommissionierarbeitsplatz, die eine Gesamtleistung verringern können. Andererseits kann eine verringerte Gesamtleistung durch Stausituationen entstehen, bei welchen zu viel Ladegut am Kommissionierarbeitsplatz eintrifft und dort nicht schnell genug durch den Kommissionierer abgearbeitet werden kann. Dies kann dazu führen, dass Ladegut zum Beispiel in Zwischenpuffern oder Sequenzern zwischengespeichert werden muss, was zusätzliche Zeit und Ressourcen beansprucht. Dies kann insbesondere deshalb der Fall sein, da Artikel mit unterschiedlichen Eigenschaften, beispielsweise mit unterschiedlichen haptischen Eigenschaften, unterschiedlichem Volumen, Gewicht, Verpackungsgrößen etc., nicht mit gleichem Durchsatz kommissioniert werden können.

Zur Lösung dieses Problems wird daher ein computerimplementiertes Verfahren zum Optimieren einer Bereitstellung von Ladegut an einem Kommissionierarbeitsplatz eines Intralogistiksystems vorgeschlagen. Dieses Verfahren kann vorteilhaft die oben beschriebenen Stausituationen oder Leerlaufsituationen verringern, um so eine Gesamtleistung des Intralogistiksystems zu verbessern und/oder Schwankungen einer Kommissionierleistung eines Kommissionierers zu glätten. Als ein Kommissionierarbeitsplatz kann ein Arbeitsplatz eines Kommissionierers verstanden werden, bei dem Ladegut, gemäß eines Kommissionierauftrags, beispielsweise aus Transportbehältern entnommen, zusammengestellt und kommissioniert wird und dann für einen späteren Weitertransport zum Kunden vorbereitet wird. Der Kommissionierer kann insbesondere eine Kommissionierperson sein, welche den Kommissionierauftrag, insbesondere manuell, bearbeitet. Alternativ kann der Kommissionierer als Maschine ausgeführt sein, beispielsweise als automatisierter oder teilautomatisierter Kommissionierroboter. In dem Intralogistiksystem können somit manuelle und/oder (teil-)automatisierte Kommissionierarbeitsplätze vorgesehen sein.

Das Intralogistiksystem weist eine Puffervorrichtung mit Pufferpositionen für Ladegut sowie eine Ladegut-Manipulationseinheit auf. Eine Puffervorrichtung weist hierbei eine oder mehrere Pufferpositionen auf, auf welchen ein oder mehrere Ladegüter abgestellt bzw. zwischengespeichert werden können. Gemäß einem Beispiel können übereinander angeordnete Pufferpositionen eine Puffervorrichtung bilden. Jede dieser Pufferpositionen kann dabei eine oder eine Vielzahl von Pufferplätzen nebeneinander aufweisen, wobei die Pufferplätze jeweils zur Aufnahme eines Ladeguts ausgebildet sind. Dabei ist jede der Pufferpositionen so ausgestaltet, dass Ladegut, insbesondere jeweils von den Pufferplätzen, entnommen werden kann. Für weitere Ausführungsvarianten wird auf die Beschreibung der Ausführungsbeispiele verwiesen. Die Puffervorrichtung kann hierbei an verschiedenen Stellen des Intralogistiksystems angeordnet sein.

Die Ladegut-Manipulationseinheit ist insbesondere als Übergabevorrichtung zwischen der Puffervorrichtung und der Fördertechnik ausgebildet und dazu eingerichtet, Ladegut von der Puffervorrichtung aufzunehmen und an die Fördertechnik zu übergeben. Die Ladegut-Manipulationseinheit kann in diesem Zusammenhang als Komponente zum Transport von Waren, insbesondere als Einlager- und Auslagersystem umfassend Regalbediengeräte, beispielsweise Einebenenregalbediengeräte (Shuttles) und/oder Mehrebenenregalbediengeräte (stacker cranes) verstanden werden, wenn beispielsweise Pufferplätze der Puffervorrichtung durch ein Lagerregal bereitgestellt sind. Bevorzugt sind die Pufferpositionen durch Bereitstellvorrichtungen gebildet, welche jeweils dazu ausgebildet sind, Ladegut von einem Einlager- und Auslagersystem, insbesondere von Einebenenregalbediengeräten, zu übernehmen und an eine Hebevorrichtung der Ladegut-Manipulationseinheit zu übergeben. Eine Bereitstellvorrichtung kann als motorisch angetriebene Fördervorrichtung (aktive Bereitstellvorrichtung) oder als stationärer Auflagetisch ohne motorisch angetriebene Fördervorrichtung ausgebildet sein (passive Bereitstellvorrichtung). Die verschiedenen Ausführungen sind bespielweise in der WO 2013/090970 A2 beschrieben.

Das vorgeschlagene Verfahren umfasst einen Schritt des Ermittelns von Transportzeiten von Ladegut von einer Pufferposition der Puffervorrichtung zum Kommissionierarbeitsplatz des Intralogistiksystems, wobei insbesondere ein Transport des Ladeguts simuliert wird. Genauer gesagt erfolgt das Simulieren mithilfe einer Simulationseinheit, die zum Beispiel ein modellhaftes Abbild des Intralogistiksystems zum Zwecke der Berechnung von Transportzeiten umfasst. Das Simulieren solcher komplexen Systeme erfolgt in der Simulationseinheit mithilfe geeigneter softwaregestützter Simulationssysteme. Anders ausgedrückt berechnet die Simulationseinheit unter Berücksichtigung der bekannten Teil-Transportzeitenmodelle und/oder gemessener Zeit-Daten von Ladegut durch die Fördertechnik und durch sonstige Komponenten des Intralogistiksystems unter verschiedenen Randbedingungen resultierende Gesamtzeiten, die ein Ladegut von der Aufnahme von einer Pufferposition bis zur Ankunft am Kommissionierarbeitsplatz benötigt.

Dabei kann die Simulationseinheit, gemäß einem Beispiel, für ein und dasselbe Ladegut eine Vielzahl von Transportzeiten unter verschiedenen Szenarien, beispielsweise Auftragskonstellationen, berechnen. Es kann als ein Gedanke der Erfindung angesehen werden, dass die Pufferposition nunmehr in eine gesamte Simulation des Intralogistiksystems miteinbezogen wird. Der Begriff Pufferposition kann an dieser Stelle insbesondere auch einen oder mehrere Pufferplätze dieser Pufferposition umfassen. Die im Stand der Technik bekannten Lösungen beschreiben zwar die Simulation von Teilbereichen von Intralogistiksystemen, allerdings beschränken sich diese Simulationen meist auf die Fördertechnik, da sich hier Transportzeiten mit geringen Varianzen aufgrund ihres definierten zeitlichen Verhaltens ausreichend genau vorhersagen lassen. Die Varianzen liegen hier beispielsweise im Bereich von wenigen Sekunden.

Gleichzeitig sind die Prozesse im Lagerbereich aufgrund der Lagerorganisation, Lagerstruktur und der langen Transportwege innerhalb des Lagerbereiches deutlich größeren zeitlichen Varianzen von oft mehr als 30 Sekunden bis mehrere Minuten unterworfen, sodass eine Simulation im Kontext des gesamten Intralogistiksystems nur unbefriedigend genaue Vorhersagen erlaubt. Ein Gedanke dieser Erfindung liegt also darin, durch das intelligente Nutzen einer fördertechniknahen Puffervorrichtung die zeitliche Vorhersagbarkeit deutlich zu verbessern. Mit anderen Worten findet durch die Einführung der Puffervorrichtung eine simulationstechnische Entkopplung des Lagerbereichs von der Fördertechnik statt, wobei der Vorteil einer genaueren Vorhersage der tatsächlichen Transportzeiten von Ladegut zum Kommissionierarbeitsplatz erzielt wird.

In einem weiteren Schritt erfolgt ein Bestimmen einer zu erwartenden Kommissionierleistung des Kommissionierarbeitsplatzes mithilfe der Simulationseinheit. Eine Kommissionierleistung kann beispielsweise als Aufträge pro Zeiteinheit, Anzahl Ladegut pro Zeiteinheit, Artikel pro Zeiteinheit beschrieben sein und soll eine Leistung eines Kommissionierers, beispielsweise einer Kommissionierperson oder eines entsprechenden maschinellen Kommissionierroboters beschreiben. Eine zu erwartende Kommissionierleistung meint hierbei beispielsweise eine mit einer bestimmten Wahrscheinlichkeit in der Zukunft liegende Kommissionierleistung, die dann als Grundlage für Berechnungen und Simulationen herangezogen werden kann. Dies kann auch eine zeitliche Verteilung verschiedener Leistungslevel über einen bestimmten Zeitraum bedeuten. Gemäß einem Beispiel erfolgt die Bestimmung einer zu erwartenden Kommissionierleistung des Kommissionierarbeitsplatzes ohne eine Simulationseinheit, beispielsweise aufgrund statistischer und/oder historischer Daten.

In einem weiteren Schritt erfolgt ein Berechnen einer zukünftigen Bereitstellungssequenz von Ladegut mit den jeweiligen Bereitstellungszeitpunkten des Ladeguts an dem Kommissionierarbeitsplatz auf Basis einer zuvor bestimmten Kommissionierleistung des Kommissionierers. Hierbei meint die Bereitstellungssequenz beispielsweise eine bestimmte Reihenfolge von Ladegut, beispielsweise Transportbehälter, die sequenziell nacheinander zu einem Kommissionierarbeitsplatz gefördert und dann dort in einer Warteschlange in dieser Reihenfolge einem Kommissionierer bereitgestellt werden. Unter dem Bereitstellungszeitpunkt kann eine relative oder absolute Zeitangabe in Bezug auf ein bestimmtes Ladegut verstanden werden, bei der dieses Ladegut für einen Kommissionierarbeitsschritt bereitsteht oder bereitstehen soll. Ladegut kann auch als eine Vielzahl von Ladegütern, Transportbehältern, Artikeln oder Ähnlichem verstanden werden.

Das Berechnen erfolgt dabei derart, dass am Kommissionierarbeitsplatz ein Betrag einer zeitlichen Differenz zwischen dem Zeitpunkt eines Abschlusses eines Kommissionierarbeitsschrittes zu einem Ladegut und dem Zeitpunkt des Eintreffens des nächsten Ladeguts am Kommissionierarbeitsplatz minimiert ist. Anders ausgedrückt soll auf diese Weise weder eine Stausituation entstehen, wo zu viel Ladegut am Kommissionierarbeitsplatz wartet (Behälterstau) und nicht schnell genug vom Kommissionierer abgearbeitet werden kann, noch soll eine Leerlaufsituation entstehen, bei der ein Kommissionierer auf das Eintreffen des nächsten Ladeguts am Kommissionierarbeitsplatz warten muss. Beide genannte Fälle stellen aus Sicht einer Gesamtleistung des Intralogistiksystems ungünstige Zustände dar. Das Minimieren dieser zeitlichen Differenz kann als Optimierungsfunktion im Hinblick auf einen idealen Zustand einer maximal möglichen Performance des Kommissionierarbeitsplatzes in Bezug auf die Bereitstellung von Ladegut verstanden werden. Es kommt also, mit anderen Worten, zu einer Glättung einer zeitlichen Verteilung einer Kommissionierleistung eines Kommissionierers.

In einem weiteren Schritt erfolgt durch die Simulationseinheit und basierend auf den ermittelten Transportzeiten des Ladeguts durch das Intralogistiksystem zum Kommissionierarbeitsplatz ein Berechnen einer Ladegutbestückung der Pufferpositionen der Puffervorrichtung mit den zugehörigen Verfügbarkeitszeitpunkten. Dabei erfolgt das Berechnen derart, dass sich die zuvor berechnete Bereitstellungssequenz mit den Bereitstellungszeitpunkten für Ladegut am Kommissionierarbeitsplatz ergibt. Liegt also eine optimale Bereitstellungssequenz zusammen mit den entsprechenden Bereitstellungszeitpunkten für den Kommissionierarbeitsplatz vor, kann daraus mithilfe der Simulation des Intralogistiksystems die dafür notwendige Bestückung der Pufferpositionen bzw. der Pufferplätze der Puffervorrichtung mit Ladegut sowie auch die zugehörigen Zeitpunkte oder Zeiträume zurückgerechnet werden.

Es ist also, zum Zwecke des richtigen Verständnisses, zwischen der Bereitstellung von Ladegut vor einem Kommissionierarbeitsplatz und der Zurverfügungstellung von Ladegut an den Pufferpositionen der Puffervorrichtung zu unterscheiden. Eine solche Ladegutbestückung mit den zugehörigen Verfügbarkeitszeitpunkten kann im konkreten Fall bedeuten, dass zum Beispiel ein Ladegut L1 spätestens zu einem absoluten Zeitpunkt t1, beispielsweise 11:33:30 Uhr, an einem bestimmten Pufferplatz P3 abgestellt sein muss, damit anschließend eine Ladegut-Manipulationseinheit das Ladegut L1 aufnehmen und über die Fördertechnik weitertransportieren kann. Gemäß einem Beispiel kann der Verfügbarkeitszeitpunkt einen frühesten oder spätesten Zeitpunkt oder auch eine Zeitspanne angeben, in der beispielsweise von einem lagerinternen Transportsystem ein Ladegut zu einem Pufferplatz und/oder Pufferposition transportiert und dort abgesetzt wurde.

In einer Ausführungsform wird die Bereitstellungssequenz berechnet, sodass eine Anzahl von direkt nacheinander am Kommissionierarbeitsplatz bereitzustellendem Ladegut eines gleichen Auftrags maximiert ist, wenn der Auftrag beispielsweise Ware von mehreren Ladegütern umfasst. Auf diese Weise kann vorteilhaft eine Zeit zum Abarbeiten ein und desselben Auftrags durch einen Kommissionierer verkürzt werden. Dem liegt der Gedanke zugrunde, dass bei Lösungen im Stand der Technik die Bereitstellungssequenzen abwechselnd Ladegut zu verschiedenen Aufträgen enthalten und folglich Aufträge am Kommissionierarbeitsplatz nicht abgeschlossen werden können, da auf Ladegut oder vom Ladegut aufgenommene Ware gewartet werden muss. Folglich ergeben sich längere Auftragsbearbeitungszeiten, die durch die gezielte Sequenzierung zusammengehörigen Ladeguts verkürzt werden können. Zusätzlich können Transportzeiten von Ladegut minimiert werden, da das Ladegut keine Warterunden auf der Fördertechnik ausführen oder temporär in einen Sequenzer oder gesonderten Puffer umgeleitet werden muss. Ein weiterer Ansatz kann darin bestehen, anstatt der Sequenzierung von Ladegut im Rahmen größerer Aufträge (Retail und Grocery), Einzelaufträge in einer optimierten Sequenz zusammenzustellen. Als Einzelaufträge können beispielsweise e-Commerce-Aufträge verstanden werden, die häufig nur einen einzelnen Artikel aufweisen.

In einer Ausführungsform erfolgt das Bestimmen einer zukünftigen Kommissionierleistung des Kommissionierarbeitsplatzes durch Prognostizieren mithilfe der Simulationseinheit. Gemäß einem Beispiel können historische Kommissionierleistungsdaten über geeignete Berechnungsmethoden wie Interpolation oder Regressionsmodelle zur Berechnung zukünftiger Kommissionierleistungen verwendet werden. Gemäß einer weiteren Ausführungsform basiert das Prognostizieren auf einer Analyse eines zeitlichen Verlaufes einer Ist-Kommissionierleistung des Kommissionierarbeitsplatzes. Anders ausgedrückt kann eine Auswertung von bestimmten zurückliegenden Zeiträumen und zeitlichen Verläufen der Performance des Kommissionierers, also von historischen Ist-Kommissionierleistungen erfolgen. Als Vorteil kann eine realistischere Prognose erstellt werden, da ein Leistungsprofil ein und desselben Kommissionierers in der Regel geringeren Schwankungen unterliegt und daher mit guter Genauigkeit in die Zukunft fortgeschrieben werden kann.

In einer Ausführungsform erfolgt das Prognostizieren der Kommissionierleistung auf Basis von Kommissionierleistungsprofilen, beispielsweise mithilfe einer Erfassungseinheit für Kommissionierleistungsprofile. Unter einem Kommissionierleistungsprofil kann beispielsweise ein typischer zeitlicher Verlauf einer Kommissionierleistung eines Kommissionierers, insbesondere eines entsprechenden maschinellen Kommissionierroboters verstanden werden. Beispielsweise kann ein solches Kommissionierleistungsprofil Schwankungen einer Kommissionierleistung während eines Arbeitstages, gegebenenfalls auch unter Berücksichtigung von Pausenzeiten und Ähnlichem abbilden. Vorteil eines solchen Kommissionierleistungsprofils kann eine vereinfachte ganzheitliche Zuordnung der entsprechenden Leistungspositionen zu einem Kommissionierer sein. Gemäß einem Beispiel erfolgt ein Erzeugen eines Kommissionierleistungsprofils durch Auswertung historischer Leistungsdaten, insbesondere kombiniert mit Artikel-Metadaten, beispielswiese Gewicht, Volumen, Artikelbeschreibung, Packdichten pro Kompartiment, und einer zeitlichen Dimension. Diese Daten können beispielsweise auf Quellen in verschiedenen Intralogistiksystemen basieren. Dies kann auch Intralogistiksysteme von verschiedenen Kunden und/oder Standorten betreffen.

Die Kommissionierleistungsprofile werden gemäß dieser Ausführungsform mithilfe eines trainierten Modells des maschinellen Lernens (Machine-Learning-Modell bzw. MLM) erzeugt, insbesondere mithilfe eines trainierten künstlichen neuronalen Netzes. Gemäß einem Beispiel werden vordefinierte Kommissionierleistungsprofile vorab definiert, die sich für eine Klassifizierung mithilfe eines Modells des maschinellen Lernens eignen. Ein mit diesen Trainingsdaten vorbereitetes Modell des maschinellen Lernens ordnet dann die aktuellen erfassten Kommissionierleistungsdaten, beispielsweise durch Klassifizierung, einem der bereitgestellten Kommissionierleistungsprofile zu.

In einer Ausführungsform erfolgt dies im vorgestellten Verfahren durch den Schritt des Selektierens eines Kommissionierleistungsprofils durch Klassifizieren der Kommissionierleistungsdaten mithilfe eines trainierten Modells des maschinellen Lernens, insbesondere mithilfe eines trainierten künstlichen neuronalen Netzes.

In einer Ausführungsform erfolgt das Selektieren derart, dass eine Abweichung des selektierten Kommissionierleistungsprofils zum zeitlichen Verlauf der Ist-Kommissionierleistung minimiert ist. Mit anderen Worten kann ein Kommissionierleistungsprofil auch dadurch ausgewählt werden, dass beispielsweise das Kommissionierleistungsprofil ausgewählt wird, bei dem über eine intelligente Auswertungsfunktion die Summe aller Abweichungen zwischen den jeweiligen diskreten Leistungswerten am geringsten ist. Dies kann, gemäß einem Beispiel, mithilfe einer Auswahleinheit für Kommissionierleistungsprofile erfolgen.

In einer Ausführungsform weist das Verfahren weiterhin den Schritt des Erstellens einer Manipulationsvorgabe für eine Steuereinheit der Ladegut-Manipulationseinheit für ein Aufnehmen von Ladegut von den Pufferpositionen der Puffervorrichtung und ein Abgeben von Ladegut an die Fördertechnik zum Fördern von Ladegut zum Kommissionierarbeitsplatz auf. Mit anderen Worten kann die Manipulationsvorgabe zum Beispiel als Befehl oder Befehlssatz samt Steuerinformationen für einen Heber an einem Regalsystem verstanden werden, der dann zu einem definierten Zeitpunkt zu einer angegebenen Pufferposition oder Pufferplatz der Puffervorrichtung fährt und das Ladegut dort aufnimmt, weiterbefördert und dann auf einer Fördertechnik zum Weitertransport in Richtung eines Kommissionierarbeitsplatzes ablegt.

Die Manipulationsvorgabe kann beispielsweise von einer Steuereinheit des Intralogistiksystems generiert werden. Die Manipulationsvorgabe kann, gemäß einem Beispiel, verschiedene Vorgaben für die Ladegut-Manipulationseinheit aufweisen, wie beispielsweise in Bezug auf Geschwindigkeit, Beschleunigung, Pufferplatzinformationen, Pufferpositionsinformationen, Informationen zum Übergabepunkt zur Fördertechnik, zusätzliche Angaben zum Ladegut, Gewicht und Ähnliches. In anderen Worten umfasst das Erstellen der Manipulationsvorgabe, gemäß einer Ausführungsform, ein Erzeugen eines Startsignals für die Steuereinheit der Ladegut- Manipulationseinheit zum Aufnehmen eines Ladeguts von einer der Pufferpositionen der Puffervorrichtung und/oder Verändern einer Dynamik der Ladegut-Manipulationseinheit und/oder Verändern oder Vorgeben einer Anfahrsequenz der Pufferpositionen.

Gemäß einer Ausführungsform weist das Verfahren zusätzlich einen Schritt des Bereitstellens der berechneten Ladegutbestückung der Pufferpositionen und/oder Pufferplätze der Puffervorrichtung mit den zugehörigen Verfügbarkeitszeitpunkten an eine Steuereinheit für Transportfahrzeuge des Intralogistiksystems auf. Gemäß einem Beispiel können diese Transportfahrzeuge des Intralogistiksystems Fördermittel eines Lagers oder Lagerbereiches sein. Die oben beschriebene Entkopplung des Lagerbereichs von der Fördertechnik kann vorteilhaft die Möglichkeit schaffen, dass im Lagerbereich eine vom restlichen Intralogistiksystemen zumindest teilweise eigenständig operierende Steuerinstanz vorgehalten werden kann. Durch die im Lagerbereich deutlich höheren zeitlichen Varianzen im Vergleich zur Fördertechnik des Intralogistiksystems kann es notwendig sein, eine eigene Logik und Regelung vorzusehen.

Um die mit dieser Lösung angestrebte Glättung einer Kommissioniererauslastung und insgesamt eine optimale Auslastung der sonstigen Komponenten des Intralogistiksystems zu erreichen, muss das relevante Ladegut zum richtigen Zeitpunkt bzw. in der richtigen Zeitspanne an den Puffervorrichtungen zur Verfügung stehen und gegebenenfalls abgeholt und/oder weitergeleitet werden. Für die Frage des dafür notwendigen zeitlichen Vorlaufs und der dafür notwendigen Transportvorgänge kann das Lager ein eigenes Steuersystem bereitstellen. Anders ausgedrückt ist gemäß der hier diskutierten Ausführungsform die Steuereinheit für Transportfahrzeuge des Intralogistiksystems ausgeführt, ein Auslagern von Ladegut aus Lagerplätzen eines Lagers derart zu steuern, sodass das Ladegut zu den berechneten Belegungszeitpunkten an den berechneten Pufferpositionen und/oder Pufferplätzen verfügbar ist und somit beispielsweise weitergeleitet werden kann. Gemäß einem Beispiel kann dieses beschriebene Prinzip analog für den Prozess des Einlagerns von Ladegut in Lagerplätze eines Lagers angewendet werden. Der Fluss von Ladegut erfolgt hierbei in die Gegenrichtung vom Kommissionierarbeitsplatz hin zum Lager. Hier kann Ladegut ebenfalls auf Pufferpositionen abgestellt werden und in einem Folgeschritt von einem Bereitstellförderer abgeholt und in ein Lagerregal zurückgelagert werden.

In einem Aspekt der Erfindung wird ein Intralogistiksystem vorgeschlagen, das ein Lager für Ladegut, eine Vielzahl von automatisiert betriebenen Transportfahrzeugen, eine Puffervorrichtung mit einer Vielzahl von Pufferpositionen zur Aufnahme von zuvor aus dem Lager ausgelagertem Ladegut, eine Ladegut-Manipulationseinheit, eine Fördertechnik, einen Kommissionierarbeitsplatz und eine Simulationseinheit aufweist. Diese Simulationseinheit ist eingerichtet zum Simulieren und/oder Ermitteln von Transportzeiten von Ladegut von einer Pufferposition der Puffervorrichtung zu einem Kommissionierarbeitsplatz des Intralogistiksystems. Gemäß einem Beispiel ist der Kommissionierarbeitsplatz zum Kommissionieren von elektronisch erfassten Aufträgen eingerichtet.

Dieses Intralogistiksystem ist ausgeführt, das Verfahren, wie oben beschrieben auszuführen. Die Transportfahrzeuge sind eingerichtet, Ladegut zwischen dem Lager und den Pufferpositionen und/oder Pufferplätzen zu transportieren. Solche Transportfahrzeuge können beispielsweise Einlager- und Auslagersysteme wie Regalbediengeräte, Shuttles und/oder sogenannte Stacker Cranes sein, aber auch Fördertechnik zum Transport von Waren, wie beispielsweise Hängefördertechnik und/oder bodengebundene Fördertechnik, und/oder mobile Fördertechnik wie autonom verfahrbare Transportfahrzeuge. Die Ladegut-Manipulationseinheit ist ausgeführt und konfiguriert, ein Ladegut von einer Pufferposition der Puffervorrichtung aufzunehmen und an die Fördertechnik zum Weitertransport zu übergeben.

Die Fördertechnik ist eingerichtet, Ladegut zwischen der Ladegut-Manipulationseinheit und dem Kommissionierarbeitsplatz zu transportieren.
In einer Ausführungsform ist die Puffervorrichtung lagerseitig an der Ladegut-Manipulationseinheit angeordnet. Anders ausgedrückt befindet sich in diesem Beispiel die Puffervorrichtung nahe oder vor dem Heber an einem Regalsystem am Lagerbereich. Dies bedeutet, dass man in dieser Ausführungsform vorteilhaft die Puffervorrichtung an einem funktionstechnischen Übergabepunkt vom Lagerbereich zur Fördertechnik anordnet. Aus Sicht einer Simulation des Intralogistiksystems befindet sich die Puffervorrichtung somit am Anfang eines Förderweges in Richtung des Kommissionierarbeitsplatzes, sodass vor der Pufferung noch keine Wege auf der Fördertechnik zurückgelegt werden müssen.

In einer Ausführungsform weist die Ladegut-Manipulationseinheit eine Ladegut-Hebevorrichtung auf. Mit anderen Worten ist hier ein Heber beispielsweise im Sinne eines Regalbediengerätes gemeint, dass in vertikaler Richtung Ladegut von einer weiter oben liegenden Puffervorrichtung aufnehmen und in vertikaler Richtung bewegen kann. Damit kann in vorteilhafter Weise beispielsweise pro vertikaler Regalebene eine Puffervorrichtung vorgesehen werden, die parallel zueinander bestückt werden können. Eine Ladegut-Hebevorrichtung kann folglich, gemäß einem Beispiel, auf eine Vielzahl von Puffervorrichtungen zugreifen.

In einer Ausführungsform ist die Puffervorrichtung ausgeführt, dass die Ladegut-Manipulationseinheit zu einem gegebenen Zeitpunkt auf jeden Pufferplatz und/oder jede Pufferposition der Puffervorrichtung zugreifen kann. Mit anderen Worten soll hier, im Gegensatz zum First-In-First-Out-Prinzip (FIFO), vorteilhaft ein wahlweiser Zugriff auf jeden der Pufferplätze oder Pufferpositionen möglich sein. Es soll also verhindert werden, dass, wie beim FIFO-Prinzip, erst weiteres Ladegut bewegt werden muss, um an ein bestimmtes Ladegut zu gelangen und dies aufnehmen zu können. Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt ein vereinfachtes Intralogistiksystem mit ausgewählten Komponenten gemäß dem Stand der Technik;
Fig. 2 zeigt einen zeitlichen Verlauf einer Kommissionierleistung eines Kommissionierers, einer Bereitstellung von Ladegut an einem Kommissionierarbeitsplatz sowie einer resultierenden Gesamtleistung gemäß dem Stand der Technik;
Fig. 3 zeigt ein vereinfachtes Intralogistiksystemen mit Pufferpositionen und Ladegut-Manipulationseinheiten gemäß der Erfindung;
Fig. 4 zeigt ein erfindungsgemäßes Verfahren zum Optimieren einer Bereitstellung von Ladegut an einem Kommissionierarbeitsplatz eines Intralogistiksystems;
Fig. 5 zeigt ein Beispiel einer erfindungsgemäßen Puffervorrichtung mit drei Pufferpositionen und Pufferplätzen;
Fig. 6 zeigt eine Pufferposition mit zwei Pufferplätzen sowie einer Ladegut-Manipulationseinheit;
Fig. 7 zeigt einen Kommissionierarbeitsplatz mit einem Kommissionierer und Fördertechnik;
Fig. 8 zeigt eine Simulationseinheit zum Berechnen von Transportzeiten von Ladegut;
Fig. 9 zeigt eine Simulationseinheit zum Berechnen einer zu erwartenden Kommissionierleistung mit einem KI-Modul.

Die Figuren sind lediglich schematisch und nicht maßstabsgetreu. Gleiche Bezugszeichen bezeichnen in den verschiedenen Figuren gleiche oder gleichwirkende Merkmale.

### Ausführungsbeispiele

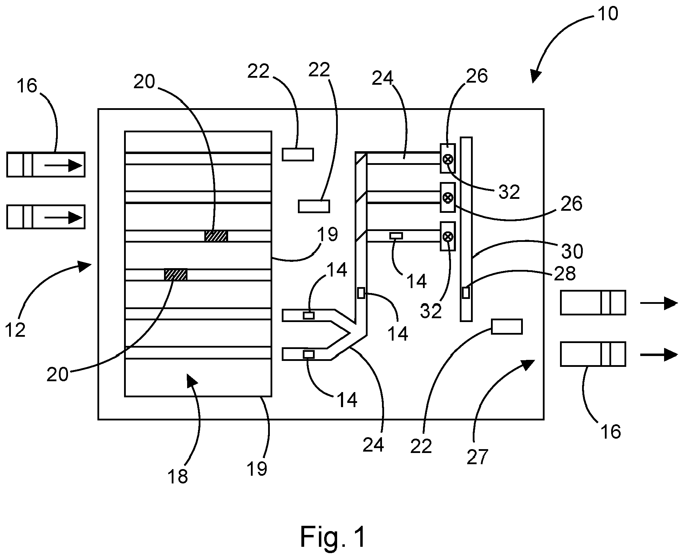

Fig. 1 zeigt ein Intralogistiksystem 10, das als Distributionszentrum für verschiedene Waren ausgeführt sein kann. Das gezeigte Intralogistiksystem 10 umfasst ein Regalsystem 18 zum Lagern der Waren, wobei die Waren in Transportbehältern vorgehalten werden können, die hier im Folgenden als Ladegut 14 beschrieben sind. Weiterhin vorgesehen sind Kommissionierarbeitsplätze 26 zum Bearbeiten von zuvor elektronisch erfassten Aufträgen und ein Einlager- und/oder Auslagersystem, welches das Regalsystem 18 und die Kommissionierarbeitsplätze 26 fördertechnisch verbindet. Das Regalsystem 18 weist eine Vielzahl von ortsfest aufgestellten Lagerregalen 19 (Komponenten zum Lagern von Waren bzw. Ladegut 14) auf. Das Einlager- und/oder Auslagersystem umfasst ein oder mehrere Regalbediengeräte 20 sowie eine mobile Fördertechnik 22, beispielsweise AGV und/oder AMR, und/oder eine stationäre Fördertechnik 24 (Komponenten zum Transport von Waren/Ladegut 14), um Ladegut 14 in die Lagerregale 19 einzulagern oder aus diesen auszulagern sowie um das Ladegut 14 zwischen dem Regalsystem 18 und den Arbeitsplätzen 26 zu transportieren.

Weiterhin ist ein Wareneingang 12 vorgesehen, wo Waren (in Fig. 1 nicht gezeigt) mithilfe von Lieferfahrzeugen 16 angeliefert werden. Diese Waren können beispielsweise im Regalsystem 18 als Ladegut 14 gelagert werden. Gemäß dem gezeigten Beispiel sind die Kommissionierarbeitsplätze 26 zum Kommissionieren von Waren gemäß den erfassten Aufträgen vorgesehen. An diesen Arbeitsplätzen sind sogenannte Kommissionierer 32, also manuelle arbeitende Kommissionierer oder automatisch arbeitende Kommissionierer, insbesondere Kommissionierarbeiter oder Kommissionierroboter, tätig, die zum Beispiel Waren oder Artikel aus dem Ladegut 14, beispielweise einem Transportbehälter entnehmen und entsprechend den vorgegebenen Aufträgen in Versandpackungen zusammenstellen. Hierfür wird Ladegut 14 an einem Arbeitsplatz 26 mittels der Fördertechnik 22, 24 bereitgestellt und in Zielladehilfsmittel, insbesondere in eine Versandpackung 28, geladen.

Die fertig kommissionierten und verpackten Waren/Ladegut 14 können mit einem (mobilen und/oder stationären) Ausgangsfördersystem 30 von den Kommissionierarbeitsplätzen 26 zum Warenausgang 27 transportiert werden. Dort werden die Versandpackungen 28 wiederum von Lieferfahrzeugen 16 aufgenommen und abtransportiert. Derartige Intralogistiksysteme 10 sind in der Regel sehr komplex und weisen eine Vielzahl verschiedenster Komponenten auf. Das Zusammenspiel aller Komponenten ist entscheidend für einen hohen Durchsatz und die geforderte Produktivität. Hierbei spielt ein gut koordiniertes Zusammenspiel zwischen dem Zuliefern von Ladegut 14 zu den Kommissionierarbeitsplätzen 26 und einem dortigen Abarbeiten von Aufträgen durch die Kommissionierer 32 eine wesentliche Rolle.

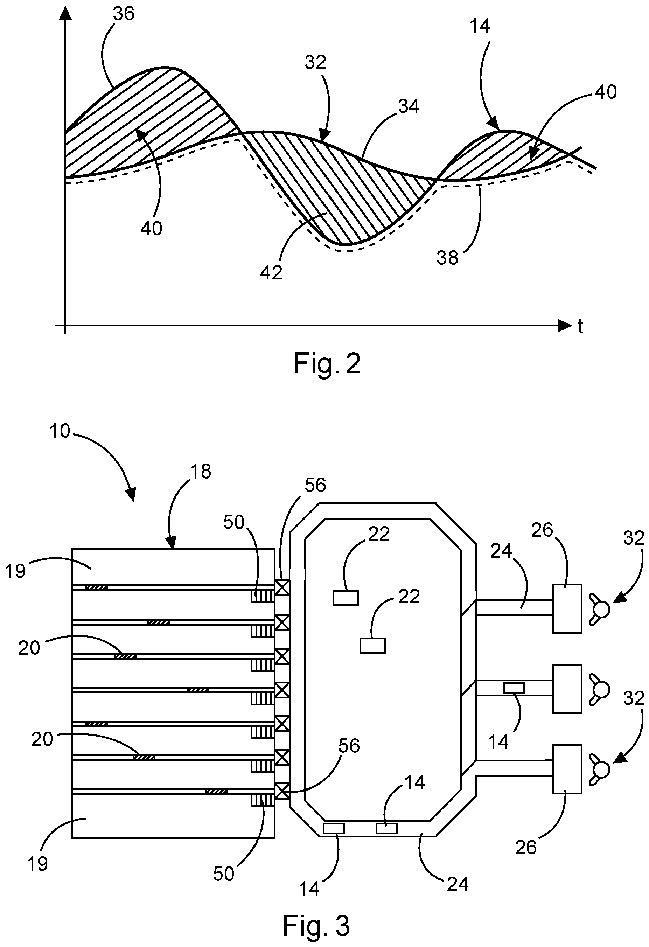

In Fig. 2 ist hierzu beispielhaft ein zeitlicher Verlauf einer Kommissionierleistung 34 eines Kommissionierers 32 relativ zu einer Anzahl von Ladegut 14 in einer Warteschlange vor dem Kommissionierarbeitsplatz 26 des Kommissionierers 32 dargestellt. Die Problematik im praktischen Betrieb eines Intralogistiksystems 10 besteht darin, dass durch die Komplexität der Komponenten des Intralogistiksystems 10, insbesondere durch die hohe Zahl an verschiedenen Waren/Ladegut 14, den sehr unterschiedlichen Transportwegen und Transportzeiten und weiteren Einflussfaktoren eine Anlieferung von Ladegut 14 am Kommissionierarbeitsplatz 26 zeitlichen Schwankungen unterliegen kann. Zusätzlich existiert eine zeitliche Varianz einer Kommissionierleistung 34 eines Kommissionierers 32 aufgrund typischer menschlicher Einflussfaktoren wie Tageszeit, individuelle Performance, Motivation und Ähnlichem. Die Einflussfaktoren können im Fall in dem ein Kommissionierer durch eine automatisierte oder teilautomatisierte Pick-Robotereinheit bzw. Kommissionierroboter gebildet ist ausschließlich oder überwiegend von Metadaten des Artikels (Ladegut) gebildet sein. Beide Kurven, also der zeitliche Verlauf der Kommissionierleistung 34 eines Kommissionierers 32 und der zeitliche Verlauf 36 der Anzahl von Ladegut 14 in einer Warteschlange vor dem Kommissionierarbeitsplatz 26 des Kommissionierers 32, verlaufen unterschiedlich, sodass sich insgesamt eine resultierende Performance 38 ergibt, die sich jeweils aus den kleineren der beiden Performancewerte, also Kommissionierleistung 34 und Bereitstellungsperformance 36 ergibt.

Daraus ergeben sich grundsätzlich zwei für eine Gesamtleistung des Systems potenziell problematische Konstellationen. Einerseits kann eine Stausituation 40 entstehen, bei dem zu viel Ladegut 14 vor einem Kommissionierarbeitsplatz 26 wartet. Anders ausgedrückt ist in dieser Situation eine momentane Kommissionierleistung 34 eines Kommissionierers 32 geringer als eine Bereitstellungsperformance 36 von Ladegut 14 vor dem Kommissionierarbeitsplatz 26. Eine weitere problematische Konstellation kann sich dann ergeben, wenn eine Leerlaufsituation 42 entsteht, bei dem zu wenig Ladegut 14 am Kommissionierarbeitsplatz 26 zur Verfügung steht und der Kommissionierer auf das nächste Ladegut 14 warten muss.

Anders ausgedrückt ist in diesem Fall eine Bereitstellungsperformance 36 von Ladegut geringer als eine Kommissionierleistung 34 eines Kommissionierers 32 zu diesem Zeitpunkt. An der in Fig. 2 dargestellten Kurve lässt sich erkennen, dass eine resultierende Performance 38 des Gesamtsystems dann verbessert werden kann, wenn die beiden zeitlichen Verläufe der Bereitstellungsperformance 36 und der Kommissionierleistung 34 des Kommissionierers 32 angeglichen werden, wobei dies idealerweise dadurch erfolgt, dass genauso viel Ladegut 14 am Kommissionierarbeitsplatz 26 zur Verfügung steht, wie ein Kommissionierer 32 gemäß seiner zu diesem Zeitpunkt vorliegenden Kommissionierleistung 34 abarbeiten kann.

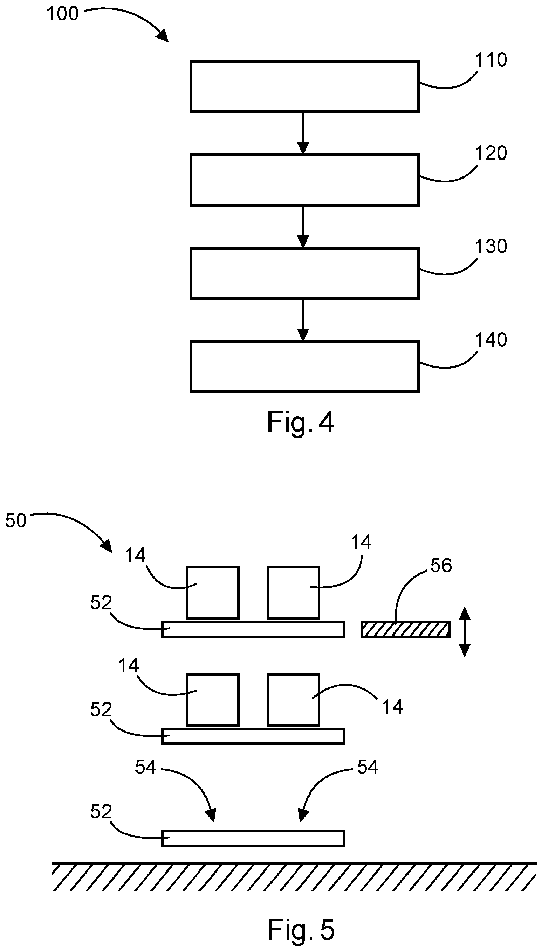

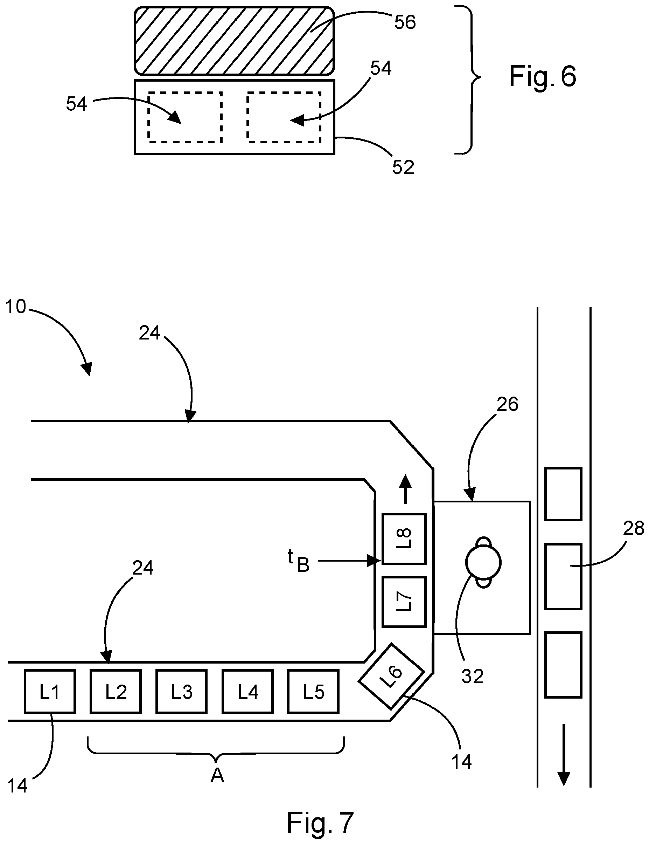

Hierzu sind, gemäß dem in Fig. 3 dargestellten vereinfachten Intralogistiksystemen 10, Puffervorrichtungen 50 vorgesehen, die im hier gezeigten Beispiel logistisch gesehen am Übergang vom Bereich der Regalsysteme 18 zur Fördertechnik 24 bzw. zum mobilen Transportsystem 22 angeordnet sind. Diese Puffervorrichtungen 50 (siehe dazu Fig. 5 und Fig. 6) weisen jeweils Pufferpositionen 52 und diese wiederum gegebenenfalls einen oder mehrere Pufferplätze 54 auf. Die Pufferpositionen 52 befinden sich hier beispielsweise zwischen den jeweiligen Ladegut-Manipulationseinheiten 56, die, beispielsweise als Heber ausgeführt, vor dem Regalsystem 18 bzw. den Lagerregalen 19 angeordnet sind, und den Transportfahrzeugen, in diesem Fall den Regalbediengeräten 20. Andere Konstellationen bzw. Zugriffsmöglichkeiten der Ladegut-Manipulationseinheiten 56 auf die Pufferpositionen sind nachfolgend noch weiter ausgeführt. Ansonsten entsprechen die in Fig. 3 dargestellten Komponenten des Intralogistiksystems 10 den bereits in Fig. 1 dargestellten Komponenten. Die Lagerregale 19 sind in Fig. 1 und Fig. 3 in einer Draufsicht dargestellt.

Um eine Verbesserung einer resultierenden Performance 38 des Intralogistiksystems 10 zu erreichen, wird das in Fig. 4 dargestellte Verfahren 100 gemäß der Erfindung vorgeschlagen, das in den nachfolgenden Figuren genauer beschrieben ist. Das Intralogistiksystem 10 weist hierzu eine Puffervorrichtung 50 auf. In einem Schritt 110 erfolgt ein Ermitteln von Transportzeiten von Ladegut 14 von einer Pufferposition 52 der Puffervorrichtung 50 zum Kommissionierarbeitsplatz 26 des Intralogistiksystems 10. Dies können, gemäß einem Beispiel eine Vielzahl von Transportzeiten aufgrund verschiedenster Szenarien und Randbedingungen sein.

In einem weiteren Schritt 120 wird mithilfe einer Simulationseinheit 44 eine zu erwartende Kommissionierleistung 34 eines Kommissionierers 32 bestimmt. Dabei kann eine Kommissionierleistung 34 eines Kommissionierers insbesondere von der Tageszeit abhängen, beispielsweise mit höherer Kommissionierleistung 34 am Morgen und geringerer Kommissionierleistung 34 am Nachmittag. Dies kann, gemäß einem Beispiel, mithilfe von statistischen/mathematischen Verfahren wie Interpolation, Regressionsmodellen oder auch mithilfe von trainierten Machine-Learning-Modellen, insbesondere künstlichen neuronalen Netzen, unter Einbeziehung der oben beschriebenen Daten und Randbedingungen erfolgen.

Für eine Abschätzung der Kommissionierleistung 34 werden, gemäß einem Beispiel, Echtdaten verschiedene Kundenanlagen verwendet. Derartige Echtdaten weisen zum Beispiel die Pickzeit auf, die von einem bestimmten Kommissionierer 32 für die Abarbeitung eines Auftrags mit einer bestimmten Anzahl an Waren erforderlich war. Weiterhin können ein Zeitpunkt, beispielsweise eine konkrete Uhrzeit, aber auch Metadaten des Artikels (Ladegut) wie Gewicht, Dimension, Volumen oder Oberflächenbeschaffenheit beschrieben sein. Basierend auf diesen Daten kann für jeden Artikel oder Artikelgruppe ein deskriptives statistisches Verteilungsmodell in Bezug auf eine Kommissionierleistung 34 eines Kommissionierers 32 aufgestellt werden. Gemäß einem Beispiel werden hierfür deskriptive statistische Parameter berechnet, insbesondere Durchschnittswerte, Minimalwerte oder Maximalwerte.

In einem Schritt 130 erfolgt ein Berechnen einer zukünftigen Bereitstellungssequenz von Ladegut 14 mit den jeweiligen Bereitstellungszeitpunkten des Ladeguts 14 an dem Kommissionierarbeitsplatz 26. Dabei erfolgt die Berechnung derart, dass am Kommissionierarbeitsplatz 26 ein Betrag einer zeitlichen Differenz zwischen einem Zeitpunkt eines Abschlusses eines Kommissionierarbeitsschrittes durch einen Kommissionierer 32 zu einem Ladegut 14 und dem Zeitpunkt des Eintreffens des nächsten Ladeguts 14 am Kommissionierarbeitsplatz 26 minimiert ist. Mit Verweis auf Fig. 2 werden hierdurch die durch entweder eine Leerlaufsituation 42 oder eine Stausituation 40 beschriebenen Differenzen zwischen beiden Kurven verringert oder minimiert und somit eine Gesamtleistung des Intralogistiksystems 10 verbessert.

In einem Schritt 140 erfolgt ein Berechnen einer Ladegut Bestückung der Pufferplätze 54 und/oder der Pufferpositionen 52 der Puffervorrichtung 50 mit den zugehörigen Verfügbarkeitszeitpunkten, sodass sich die berechnete Bereitstellungssequenz mit den Bereitstellungszeitpunkten am Kommissionierarbeitsplatz 26 ergibt. Gemäß einem Beispiel erfolgt ein Erstellen einer Manipulationsvorgabe für eine Steuereinheit der Ladegut-Manipulationseinheit 56 für ein Aufnehmen von Ladegut 14 von den Pufferpositionen 52 oder Pufferplätzen 54 der Puffervorrichtung 50 und ein Abgeben von Ladegut 14 an die Fördertechnik 22, 24. Dies kann ein Erzeugen eines Startsignals (Transport Release) für die Steuereinheit der Ladegut-Manipulationseinheit 56 umfassen. Mit anderen Worten kann dieses Steuersignal als Startsignal verstanden werden, dass beispielsweise einem Heber mitteilt, mit welcher Geschwindigkeit, Dynamik und/oder Zeitpunkt dieser ein Ladegut 14 an einem bestimmten Pufferplatz 54 aufnehmen und an ein mobiles oder stationäres Transportsystem 22, 24 weitergeben soll.

In Fig. 5 und Fig. 6 ist eine Puffervorrichtung 50 mit drei Pufferpositionen 52 gezeigt, die übereinander angeordnet sind. An jeder Pufferposition 52 können eine oder mehrere Pufferplätze 54 angeordnet sein. Im Beispiel gemäß Fig. 5, die eine Seitenansicht darstellt, bilden 3 übereinander angeordnete Pufferpositionen 52 eine Puffervorrichtung 50. Jede dieser Pufferpositionen 52 ist durch die Ladegut Manipulationseinheit 56 erreichbar. Dies bedeutet, dass die Ladegut-Manipulationseinheit 56 zu einem gegebenen Zeitpunkt auf jeden Pufferplatz 54 oder jede Pufferposition 52 der Puffervorrichtung 50 zugreifen kann.

Im gemäß Fig. 5 dargestellten Beispiel sind die Pufferplätze 54 in Richtung der Ladegut-Manipulationseinheit 56 hintereinander angeordnet und daher im First-In-First-Out-Prinzip zugänglich. Alternativ kann, gemäß der als Draufsicht dargestellten Ausführungsvariante in Fig. 6, vorgesehen sein, dass die Ladegut-Manipulationseinheit direkt auf jeden der einzelnen Pufferplätze 54 der Pufferposition 52 zugreifen kann. Ein Heber als Ausführungsvariante einer Ladegut-Manipulationseinheit 56 kann, gemäß einem Beispiel auch schmaler ausgeführt und in horizontaler Richtung verschiebbar sein, sodass jeweils in der Breite nur ein Ladegut 14 aufgenommen wird.

In Fig. 7 ist ein Beispiel eines Teilbereiches eines Intralogistiksystems 10 gezeigt. Ein stationäres Transportsystem 24 transportiert Ladegut 14, also beispielsweise eine Reihe von Transportbehältern, zu einem Kommissionierarbeitsplatz 26 mit einem Kommissionierer 32. Gemäß einem vorher erfassten Auftrag ordnet dieser Kommissionierer 32 Waren aus dem Ladegut 14, das direkt vor dem Kommissionierarbeitsplatz 26 durch das stationäre Transportsystem 24 bereitgestellt wird, einer Versandpackung 28 zu, die an einem Ausgangsfördersystem 30 bereitgestellt sind.

Jede erfolgte Warentransaktion in die Versandpackung 28 wird durch ein vom Kommissionierer 32 initiiertes Transaktions-Bestätigungssignal an ein zentrales Kommissionierdatenverarbeitungssystem bestätigt. Ist ein Auftrag abgeschlossen, wird die vollständige Versandpackung 28 mit dem Ausgangsfördersystem 30 zu einem Warenausgang 27 (hier nicht gezeigt) weitertransportiert. Es ist zu erkennen, dass eine Sequenz von Ladegut 14 nacheinander in Richtung des Kommissionierarbeitsplatzes 26 transportiert wird. Beispielhaft sind hier Ladegut L1 bis L8 gezeigt, wobei das Ladegut jeweils zu verschiedenen Aufträgen zugeordnet sein kann.

Ein Gedanke der Erfindung kann nun darin gesehen werden, dass durch intelligentes Starten des Transports des jeweiligen Ladeguts 14 von einer Puffervorrichtung 50 oder durch ein Startsignal einer Ladegut-Manipulationseinheit 56 sowie durch Steuerung der Reihenfolge der Starts vor dem Kommissionierarbeitsplatz 26 eine optimierte Reihenfolge von Ladegut 14 vor dem Kommissionierarbeitsplatz 26 entsteht. Im konkreten Beispiel gehören das direkt sequenziell nacheinander bereitgestellte Ladegut L2, L3, L4 und L5 zu einem (gemeinsamen) Auftrag A. Dies hat zur Folge, dass der Kommissionierer 32 einen kompletten Auftrag nacheinander durch die Bearbeitung des Ladeguts L2 bis L5 abschließend bearbeiten kann und dadurch die Dauer einer Auftragsbearbeitung gesenkt werden kann. Das Ladegut 14 wird nach dem Passieren des Kommissionierarbeitsplatzes 26 über das als Source Loop bezeichnete Transportsystem 22, 24 beispielsweise zurück zum Regalsystem 18 geleitet.

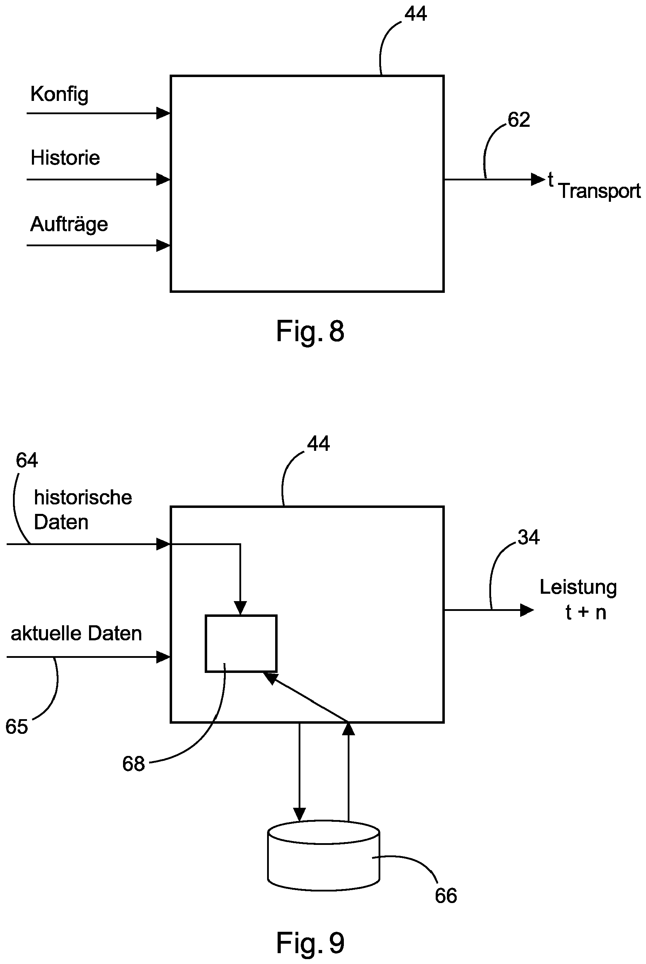

In Fig. 8 ist eine Simulationseinheit 44 zum Ermitteln von Transportzeiten von Ladegut 14 von einer Pufferposition 52 oder Pufferplatz 54 einer Puffervorrichtung 50 zu einem Kommissionierarbeitsplatz 26 gezeigt. Die Simulationseinheit 44 ist ausgeführt, eine Vielzahl von möglichen Transportszenarien von Ladegut 14 durch das Intralogistiksystem 10 zu berechnen. Dem können verschiedenste Informationen, wie beispielsweise eine Konfiguration eines Intralogistiksystems 10 mit all seinen Komponenten, Konfigurationen, mechanischen, elektrischen und weiteren Eigenschaften zugrunde liegen.

Andere Eingangsgrößen können beispielsweise historische oder statistische Daten aus demselben Intralogistiksystem 10 oder auch aus anderen Intralogistiksystemen 10 von anderen Kunden bzw. anderen Standorten sein. Weitere Informationen können beispielsweise auf Auftragsdaten basieren und auf diese Weise Einflüsse bestimmter historischer oder aktueller Auftragsstrukturen, wie beispielsweise Anzahl von Positionen, Artikelgröße, Artikelgewicht, Oberflächenbeschaffenheit und Ähnliches berücksichtigen. Gemäß einem Beispiel erfolgt das Ermitteln der Transportzeiten durch die Simulationseinheit 44 durch ein lernendes System, beispielsweise auf Basis künstlicher neuronaler Netze.

Die Simulationseinheit 44 kann einen Prozessor samt den bekannten und notwendigen Peripheriekomponenten wie Speichermedien, Schnittstellen und weiteren Komponenten aufweisen, wobei die Simulationseinheit 44 ausgeführt ist, das vorgestellte Verfahren auszuführen. Die Schritte des Verfahrens 100 müssen nicht zwangsläufig von ein und derselben Instanz ausgeführt werden, vielmehr kann eine Simulationseinheit 44 verschiedene Rechnerinstanzen umfassen, die auch örtlich getrennt angeordnet sein können. So kann beispielsweise eine Bereitstellungssequenz von Ladegut 14 auf einem separaten Rechner oder Simulationseinheit 44 ausgeführt werden. Beispielsweise können auch Schritte, die eine erhöhte Performance an Hardware oder Software erfordern, auf einem zentralisierten System ausgeführt werden.

In Fig. 9 ist die Problematik der Bestimmung (Ermittlung) einer zu erwartenden Kommissionierleistung 34 eines Kommissionierers 32 thematisiert. Die Fig. 9 zeigt eine Kommissionierleistungs-Ermittlungseinheit zum Ermitteln einer Kommissionierleistung 34 eines Kommissionierers 32 zu einem bestimmten Zeitpunkt. Es ist grundsätzlich wünschenswert, mit ausreichender Genauigkeit eine zukünftige Kommissionierleistung 34 vorhersagen zu können, um dann darauf basierend eine Optimierung der Zustellung von Ladegut 14 berechnen zu können. Hierzu ist als technische Voraussetzung eine Simulationseinheit 44 vorgesehen, die mithilfe von historischen Kommissionierleistungsdaten 64 zum Beispiel eine mathematische Fortschreibung auf zukünftige Zeiträume vollzieht.

Fig. 9 zeigt ein Beispiel einer Kommissionierleistungs-Ermittlungseinheit zum Ermitteln einer Kommissionierleistung 34 eines Kommissionierers 32 zu einem bestimmten Zeitpunkt, wobei vordefinierte Kommissionierleistungsprofile 66 in einer Datenbank zur Verfügung gestellt werden. Ein solches Kommissionierleistungsprofil 66 kann eine endliche Anzahl typischer Verläufe von Kommissionierleistungen 34 eines Kommissionierers 32 über die Zeit beschreiben. Die Begrenzung der Zahl solcher Profile kann aus Sicht einer effektiveren Berechnung vorteilhaft sein, da hierdurch die Komplexität eines Berechnungsverfahrens verringert und eine Geschwindigkeit der Berechnung erhöht werden kann.

Ein Künstliches Intelligenz-Modul, kurz KI-Modul 68, ist ausgeführt, mithilfe eines trainierten Machine-Learning Modells, insbesondere künstlichen neuronalen Netzes, historische Kommissionierleistungsdaten 64 und/oder aktuelle Kommissionierleistungsdaten 65, die mit Hilfe eines Kommissionierleistungsdaten-Erfassungsmoduls aus dem Kommissionierdatenverarbeitungssystem erfasst werden, in die oben genannten Kommissionierleistungsprofile 66 einzuteilen, zu bewerten bzw. zu klassifizieren. Anstelle eines trainierten künstlichen neuronalen Netzes kann das KI-Modul 68 auch weitere geeignete Verfahren des maschinellen Lernens, inklusive Reinforcement Learning, unsupervised Learning, semi-supervised Learning, self-supervised Learning und/oder supervised Learning unterstützen und/oder durch eine Kombination mehrerer Ansätze obiger Teilgebiete des maschinellen Lernens zusammengesetzt sein. Gemäß einem Beispiel kann das Ermitteln einer konkreten Kommissionierleistung 34 eines Kommissionierers 32 zu einem bestimmten Zeitpunkt auf Basis der zuvor, insbesondere durch Klassifikation oder durch Prognose ermittelten Kommissionierleistungsprofile 66 mit einer vorgegebenen Zeitspanne oder eines Zeitpunkts als Eingangsgröße erfolgen. Die Simulationseinheit kann hierzu einen geeigneten Zeitgeber (nicht näher dargestellt) aufweisen oder geeignete Zeitdaten empfangen.

**Bezugszeichenaufstellung**

| | | | |
|---|---|---|---|
| | | 68 | KI-Modul |
| 10 | Intralogistiksystem | | |
| 12 | Wareneingang | 100 | Verfahren zum Optimieren einer Be-reitstellung von Ladegut an einem Kommissio-nierarbeitsplatz |
| 14 | Ladegut | | |
| 16 | Lieferfahrzeuge | | |
| 18 | Regalsysteme | 110 | Ermitteln von Transportzeiten |
| 19 | Lagerregal | 120 | Bestimmen einer zu erwartenden Kom-missionierleistung |
| 20 | Regalbediengerät | | |
| 22 | mobiles Transportsystem (Fördertechnik) | 130 | Berechnen einer zukünftigen Bereitstellungssequenz von Ladegut |
| 24 | stationäres Transportsystem (Förder-technik) | 140 | Berechnen einer Ladegutbestückung der Puffervorrichtung mit Verfügbarkeitszeit-punkten |
| 26 | Kommissionierarbeitsplatz | | |
| 27 | Warenausgang | | |
| 28 | Versandpackung | | |
| 30 | Ausgangsfördersystem | | |
| 32 | Kommissionierer (Kommissionierer) | | |
| 34 | Kommissionierleistung eines Kommissionierers | | |
| 36 | Bereitstellungsperformance von Ladegut vor einem Kommissionierarbeitsplatz | | |
| 38 | resultierende Performance des Gesamtsystems | | |
| 40 | Stausituation | | |
| 42 | Leerlaufsituation | | |
| 44 | Simulationseinheit | | |
| 50 | Puffervorrichtung | | |
| 52 | Pufferposition | | |
| 54 | Pufferplatz | | |
| 56 | Ladegut-Manipulationseinheit | | |
| 62 | Transportzeit eines Ladeguts | | |
| 64 | historische Kommissionierleistungsdaten | | |
| 65 | aktuelle Kommissionierleistungsdaten | | |
| 66 | Kommissionierleistungsprofil | | |

## Patentansprüche

1. Computerimplementiertes Verfahren (100) zum Optimieren einer Bereitstellung von Ladegut (14) an einem Kommissionierarbeitsplatz (26) eines Intralogistiksystems (10), welches Intralogistiksystem (10) eine Puffervorrichtung (50) zum Zwischenspeichern von Ladegut (14), eine Fördertechnik (22, 24) zum Fördern von Ladegut (14) zwischen der Puffervorrichtung (50) und dem Kommissionierarbeitsplatz (26) sowie eine Ladegut-Manipulationseinheit (56) aufweist, welche Ladegut-Manipulationseinheit (56) dazu eingerichtet ist, Ladegut (14) von der Puffervorrichtung (50) aufzunehmen und an die Fördertechnik (22, 24) abzugeben,
wobei das Verfahren (100) die Schritte aufweist:
- Ermitteln (110), mit einer Simulationseinheit (44), von Transportzeiten von Ladegut (14) von einer Pufferposition (52) der Puffervorrichtung (50) zum Kommissionierarbeitsplatz (26) des Intralogistiksystems (10);
- Bestimmen (120), mit der Simulationseinheit (44), einer zu erwartenden Kommissionierleistung eines Kommissionierers (32) des Kommissionierarbeitsplatzes (26);
- Berechnen (130) einer zukünftigen Bereitstellungssequenz von Ladegut (14) mit den jeweiligen Bereitstellungszeitpunkten des Ladeguts (14) an dem Kommissionierarbeitsplatz (26) auf Basis der zuvor bestimmten Kommissionierleistung des Kommissionierers (32) des Kommissionierarbeitsplatzes, wobei das Berechnen (130) derart erfolgt, dass am Kommissionierarbeitsplatz (26) ein Betrag einer zeitlichen Differenz zwischen einem Zeitpunkt eines Abschlusses eines Kommissionierarbeitsschrittes zu einem Ladegut (14) und dem Zeitpunkt des Eintreffens des nächsten Ladeguts (14) am Kommissionierarbeitsplatz (26) minimiert ist;
- Berechnen (140), durch die Simulationseinheit (44) und basierend auf den zuvor ermittelten Transportzeiten des Ladeguts (14), einer Ladegutbestückung der Pufferpositionen (52) der Puffervorrichtung (50) mit den zugehörigen Verfügbarkeitszeitpunkten, sodass sich die berechnete Bereitstellungssequenz mit den Bereitstellungszeitpunkten am Kommissionierarbeitsplatz (26) ergibt.

2. Verfahren (100) gemäß Anspruch 1, zusätzlich umfassend den Schritt:
- Empfehlen einer Anpassung eines Transportprozesses zum Bereitstellen des Ladeguts (14) an den Pufferpositionen (52) der Puffervorrichtung (50), um die berechnete Ladegutbestückung bereitzustellen.

3. Verfahren (100) gemäß Anspruch 1 oder 2, wobei die Bereitstellungssequenz weiterhin berechnet wird, sodass eine Anzahl von direkt nacheinander am Kommissionierarbeitsplatz (26) bereitzustellendem Ladegut (14) eines gleichen Auftrags maximiert ist.

4. Verfahren (100) gemäß einem der Ansprüche 1 bis 3, wobei das Bestimmen einer zukünftigen Kommissionierleistung des Kommissionierarbeitsplatzes (26) durch Prognostizieren mithilfe der Simulationseinheit (44) erfolgt.

5. Verfahren (100) gemäß Anspruch 4, zusätzlich umfassend den Schritt:
- Empfangen von Daten betreffend die Kommissionierleistung des Kommissionierers (32) am Kommissionierarbeitsplatz (26) zu einer Vielzahl von Zeitpunkten, um eine Ist-Kommissionierleistung zu bestimmen, wobei das Prognostizieren auf einer Analyse eines zeitlichen Verlaufes der Ist-Kommissionierleistung des Kommissionierarbeitsplatzes (26) basiert.

6. Verfahren (100) gemäß Anspruch 4 oder 5, wobei das Prognostizieren der Kommissionierleistung auf Basis von in einem Rechnersystem gespeicherten Kommissionierleistungsprofilen (66) erfolgt, wobei die Kommissionierleistungsprofile (66) mithilfe eines Modells des maschinellen Lernens, insbesondere eines künstlichen neuronalen Netzes (68), erzeugt werden.

7. Verfahren (100) gemäß Anspruch 6, wobei das Verfahren (100) den Schritt des
- Selektierens eines Kommissionierleistungsprofils (66) aus einer Vielzahl von hinterlegten Kommissionierleistungsprofilen (66) durch Klassifizieren von erfassten Kommissionierleistungsdaten mithilfe eines trainierten Modells des maschinellen Lernens, insbesondere eines künstlichen neuronalen Netzes (68), aufweist.

8. Verfahren (100) gemäß Anspruch 7, wobei das Selektieren derart erfolgt, dass eine Abweichung des selektierten Kommissionierleistungsprofils (66) zum zeitlichen Verlauf der Ist-Kommissionierleistung minimiert ist.

9. Verfahren (100) gemäß einem der Ansprüche 1 bis 8, zusätzlich aufweisend den Schritt
- Erstellen einer Manipulationsvorgabe für eine Steuereinheit der Ladegut-Manipulationseinheit (56) für ein Aufnehmen von Ladegut (14) von den Pufferpositionen (52) der Puffervorrichtung (50) und ein Abgeben von Ladegut (14) an die Fördertechnik zum Fördern von Ladegut (14) zum Kommissionierarbeitsplatz (26).

10. Verfahren (100) gemäß Anspruch 9, wobei das Erstellen der Manipulationsvorgabe umfasst:
- Erzeugen eines Startsignals für die Steuereinheit der Ladegut- Manipulationseinheit (56) zum Aufnehmen eines Ladeguts (14) von einer der Pufferpositionen (52) der Puffervorrichtung (50) und/oder
- Verändern einer Dynamik der Ladegut-Manipulationseinheit (56) und/oder
- Verändern oder Vorgeben einer Anfahrsequenz, in welcher die Ladegut-Manipulationseinheit (56) die Pufferpositionen (52) anfahren soll.

11. Verfahren (100) gemäß Anspruch gemäß einem der Ansprüche 1 bis 10, zusätzlich aufweisend den Schritt
- Bereitstellen der berechneten Belegung der Pufferpositionen (52) der Puffervorrichtung (50) mit den zugehörigen Belegungszeitpunkten an eine Steuereinheit für Transportfahrzeuge des Intralogistiksystems (10), wobei die Steuereinheit für Transportfahrzeuge des Intralogistiksystems (10) ausgeführt ist, ein Auslagern von Ladegut (14) aus einem Lager des Intralogistiksystems (10) derart zu steuern, dass das Ladegut (14) zu den berechneten Belegungszeitpunkten an den berechneten Pufferpositionen (52) der Puffervorrichtung (50) verfügbar ist.

12. Intralogistiksystem (10), aufweisend
- ein Lager (19) für Ladegut (14),
- eine Vielzahl von automatisiert betriebenen Transportfahrzeugen,
- eine Puffervorrichtung (50) mit einer Vielzahl von Pufferpositionen (52) zur Aufnahme von zuvor aus dem Lager (19) ausgelagertem Ladegut (14),
- eine Ladegut-Manipulationseinheit,
- eine Fördertechnik (22, 24),
- einen oder mehrere Kommissionierarbeitsplätze (26),
- eine Simulationseinheit (44), eingerichtet zum Ermitteln von Transportzeiten von Ladegut (14) von einer Pufferposition (52) der Puffervorrichtung (50) zu einem der Kommissionierarbeitsplätze (26) des Intralogistiksystems,
wobei die Transportfahrzeuge eingerichtet sind, Ladegut (14) zwischen dem Lager (19) und den Pufferpositionen (52) zu transportieren, wobei die Ladegut-Manipulationseinheit (56) ausgeführt und konfiguriert ist, ein Ladegut (14) von einer Pufferposition (52) der Puffervorrichtung (50) aufzunehmen und an die Fördertechnik (22, 24) zu übergeben,
wobei die Fördertechnik (22, 24) eingerichtet ist, Ladegut (14) zwischen der Ladegut-Manipulationseinheit (56) und dem Kommissionierarbeitsplatz (26) zu transportieren, und
wobei das Intralogistiksystem (10) weiterhin eingerichtet ist, die Schritte des Verfahrens gemäß Anspruch 1 bis 11 auszuführen.

13. Intralogistiksystem (10) gemäß Anspruch 12, wobei die Puffervorrichtung (50) zwischen dem Lager (19) und der Ladegut-Manipulationseinheit (56) angeordnet ist.

14. Intralogistiksystem (10) gemäß Anspruch 12 oder 13, wobei das Lager (19) übereinander liegende Lagerebenen aufweist, welche jeweils nebeneinander angeordnete Stellplätze für Ladegüter (14) ausbilden, und die Pufferpositionen (52) übereinander angeordnet sind, wobei den Pufferpositionen (52) jeweils zumindest eine Lagerebene zugeordnet ist und wobei die Pufferpositionen (52) jeweils durch eine Bereitstellvorrichtung gebildet sind.

15. Intralogistiksystem (10) gemäß einem der Ansprüche 12 bis 14, wobei die Ladegut-Manipulationseinheit (56) eine Ladegut-Hebevorrichtung aufweist, welche eine vertikal bewegbare Transportvorrichtung zur Aufnahme von einem oder mehreren Ladegütern (14) umfasst.

16. Intralogistiksystem (10) gemäß einem der Ansprüche 12 bis 15, wobei die Puffervorrichtung (50) ausgeführt ist, dass die Ladegut-Manipulationseinheit (56) zu einem gegebenen Zeitpunkt auf jede Pufferposition (52) der Puffervorrichtung (50) zugreifen kann.
